# EUROPEAN PATENT SPECIFICATION

(11) **EP 1 385 103 B1**
(45) Date of publication and mention of the grant of the patent: **13.09.2006**
(21) Application number: 02016515.5
(22) Date of filing: 23.07.2002
(51) Int. Cl.: G06F 17/50, B29C 45/77

(54) **Simulation of fluid flow and structural analysis within thin walled three dimensional geometries**
Simulation einer Flüssigkeitsströmung und Strukturanalyse in dünnwandigen Geometrien
Simulation d'un écoulement de fluide et analyse de structure dans de gémétries à parois minces

(43) Date of publication of application: 28.01.2004
(73) Proprietor: SIMCON kunststofftechnische Software GmbH, 52134 Herzogenrath (DE)
(72) Inventor: Filz, Paul F. Dr., 52499 Baesweiler (DE); Kutschera, Harold, 52222 Stolberg (DE); Stöckmann, Helmut, 52249 Eschweiler (DE); Welter, Frank, 52159 Roetgen (DE); Webelhaus, Karl Dr., 52074 Aachen (DE)
(74) Representative: König, Werner

(56) References cited:
- US-A- 6 096 088
- LENFELD P ET AL: "SIMULATION OF TEMPERATURE FIELDS IN MOULDS AND STRESS ANALYSIS OF PLASTICS INJECTION MUOLDINGS USING THE FINITE ELEMENTS METHOD" INTERNATIONAL POLYMER SCIENCE AND TECHNOLOGY, RAPRA TECHNOLOGIES, SHROPSHIRE, GB, vol. 22, no. 3, 1 March 1995 (1995-03-01), pages T-87-T-90, XP000523456 ISSN: 0307-174X
- HIEBER C A ET AL: "A FINITE-ELEMENT/FINITE-DIFFERENCE SIMULATION OF THE INJECTION- MOLDING FILLING PROCESS" JOURNAL OF NON-NEWTONIAN FLUID MECHANICS, ELSEVIER, NL, vol. 7, no. 1, 1980, pages 1-6, XP000783759 ISSN: 0377-0257

## Description

The instant invention pertains to the simulation of fluid flow and structural analysis within thin-walled three-dimensional geometries in which the input for the simulation is an outer skin or a volumetric geometry description and contains a mesh of Finite Elements or in which a mesh of Finite Elements is generated .

Injection molded parts are very often complex objects to which high quality demands are made. There are different processing methods for the different kinds of plastic and a set of special processes with which it is possible to optimize part properties to its application. The application properties of plastic parts depend besides on the used material strongly on the processing history in the injection molding process. In most cases even with a lot of experience it is not possible to design neither an optimal part, nor the relating injection mold nor to use the right processing parameters. Very often injection molds have to be modified multiple times before the plastic part has the needed quality. Each modification step means a significant investment since the mold modifications easily are above 15 % of the initial mold cost. Even more effect can be achieved by optimizing gate locations, runner balance, part wall thickness, mold cooling and process parameters.

For this reason already in the 70's procedures were developed with which it was possible to simulate and optimize the injection mold. Today the injection molding simulation is developed to an industrial applicable standard engineering tool. The injection molding process can be simulated from the filling phase over packing up to shrinkage and warpage of a part cooled down to ambient temperature. Special processes can be simulated such as sandwich injection molding, gas injection and injection compression molding. Also the injection molding of elastomers, thermosets, LSR and RIM materials can be examined.

In this framework the assumptions are made that the motion of a polymer can be described by the Navier-Stokes-Equation where the viscosity depends strongly on temperature and shearing. That means a coupled system for the energy equation and the Navier-Stokes-Equation has to be solved. For thin walled parts some simplifications can be made, for example neglecting the inertia forces.

At the beginning of each simulation it is necessary to prepare the geometry of the part in a way, that the desired software is able to handle it. For this there are four general possibilities:

### Standard Methods

### 1. Midplane Model

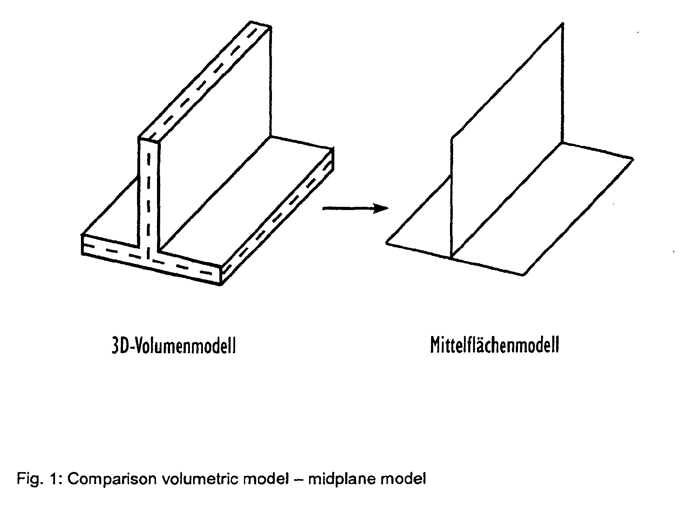

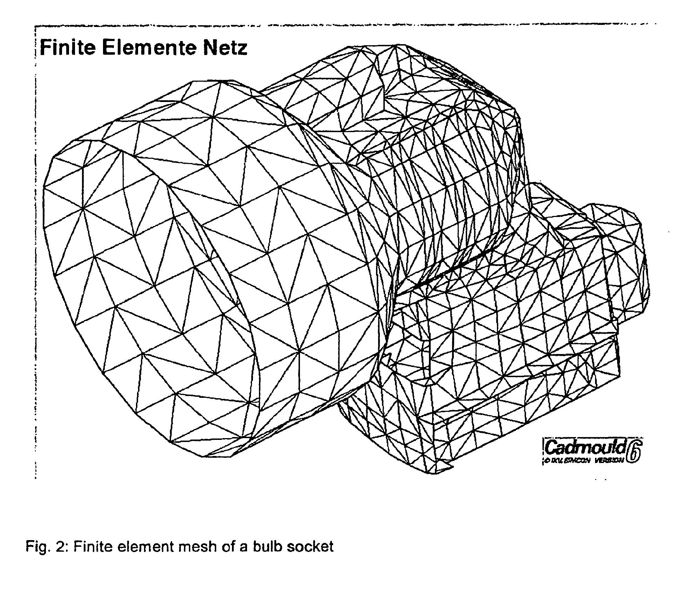

Most injection molding parts are thin i.e. their thickness is very small compared with the other dimensions. In this model the part is three-dimensional represented by so called thin shell finite elements, which may be triangular or quadrilateral, to which the local thickness is assigned as physical attribute **(fig. 1 - 2).** The ideal location of these elements is the true midplane with equal distance to these surfaces. A description of this location is not available from a CAD system as a by-product of part design. Instead of the correct midplane therefore a single-plane model of one selected surface (of two opposing) is generated, as the surfaces are a regular product of CAD. The simplest model is the filling pattern method which is based on the principal of Huyghens wave propagation *G*. *Menges. Eine Methode zur Bestimmung des Fließfrontverlaufs beim Spritzgiessen von Thermoplasten. In Plastverarbeiter, 31 (11):671-676, 1980.*

A better model is based on the generalized Hele-Shaw-Approximation of the Navier-Stokes-Equation. Comparison of the forces in the melt shows that the friction in the thickness direction is the dominating one. This results in a parabolic equation for the pressure. This equation has Dirichlet-Boundary-Conditions at the flow front and Neuman-Boundary-Conditions at the cavity wall. For the energy equation only the heat conduction in the thickness direction, the shear heating and the convection are considered. These equations are solved in every time step and combined with an updating of the flow front position using a control volume approach or a level set method. See *P*. *Filz. Neue Entwicklungen für die Simulation des Spritzgießprozesses von Thermoplasten. Dissertation, RWTH Aachen, 1988, C. Hieber, H. Chiang and K. Wang. A unified simulation of the filling and postfillling stages in injection molding. Part I: Formulation. Poly. Eng. Sci., 31:116-124, 1991, C. Tucker, editor. Computer Modeling for Polymer Processing. Carl Hanser Verlag, Munich, Vienna, New York, 1989* for details.

### 2. Volumetric Model

A volumetric model describes the total volume of the geometry in tetrahedral, pentahedral or hexahedral volumetric Finite Elements. An additional way to describe a volumetric mesh is to use orthogonal three dimensional elements.

The simulation for both models may be performed using the Finite Element Method FEM, the Finite Volume Method or the Finite Difference Method. *D*. *M. Lipinski, W*. *Schaefer, and E. Flender Numerical modeling of the filling sequence and solidification of castings Modeling of Casting, Welding and Advanced Solidification Processes IV. The Minerals, Metals and Material Society, 1993; K. F. Webelhaus Numerische Simulation des Spritzgießprozesses unter Berücksichtigung dreidimensionaler Strömungseffekte und der Materialkompressibilität, Dissertation RWTH Aachen 2000.*

### 3. Boundary Element Method

For the boundary element method the governing equations are transformed in a way that only an integral equation on the boundary (surface) has to be solved. This means that only on the surface a mesh has to be generated. Injection molding simulations using a Boundary Element Method are described in: F.S. Costa, W.

Thompson, and W. Friedl. An adaption of the boundary element method for modeling gas injection molding. In *Simulation of Material Processing: Theory, Methods and Applications (Numiform 95),* pages 1113-1118. Balkena, Rotterdam, 1995, and in R.E. Khayat, A. Derdouri and L.P. Hebert. A three dimensional boundary-element approach to gas-assisted injection molding. *J. Non-Newtonian Fluid Mech., 57: 253-264*, 1995.

### Evaluation of the standard methods

Unfortunately a midplane model cannot be made automatically by any software tool available, at least not for more complex real life parts. This means to perform simulations in the midplane model substantial interactive work has to be made to prepare a 3D CAD information, typically given in a standard format like IGES or VDAFS, for simulation. Nevertheless the midplane model is still the most commonly used one for process simulation and it has proven to be pretty accurate and has been successfully used for years.

The advantage of a midplane model is, that the three dimensional flow of a fluid in a thin walled three dimensional geometry can be simulated using a two dimensional Hele-Shaw type of flow description.

Volumetric models can only be modeled automatically with tetrahedra and orthogonal three dimensional elements, but since in thin walled geometries there are high gradients of e.g. temperature and shear rate, it is necessary to descretisize multiple times in thickness direction. This leads to very large element numbers and therefore to too long computing times for non scientific use.

The Boundary Element Method = BEM can only perform purely on the surface if the kernel of the differential equation is known. Because of the non constant viscosity of the polymer melt in injection molding an additional integral over the interior of the part remains in the equation. Besides this every surface element is connected to every other, which results in a large computation time for high element numbers.

### 4. Surface Model

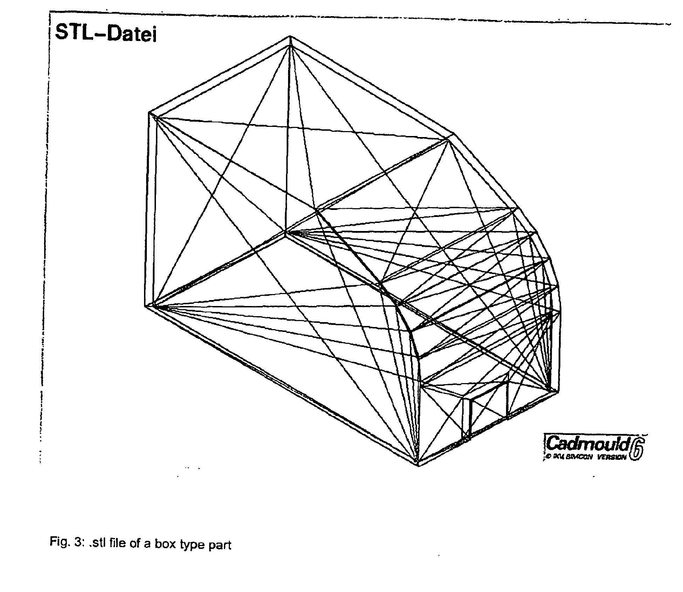

A way out of this dilemma is to use the surface model or the outer skins of volumetric models for simulation. Normally todays CAD systems can generate e.g. stl files or other part surface (outer skin) information automatically. In general e.g. a stl file can be used for performing simulations in the same way as a midplane model **(fig. 3).**

Nevertheless in some geometry configurations without adapting the model and/or the simulation method to the geometry the simulation results may be unrealistic.

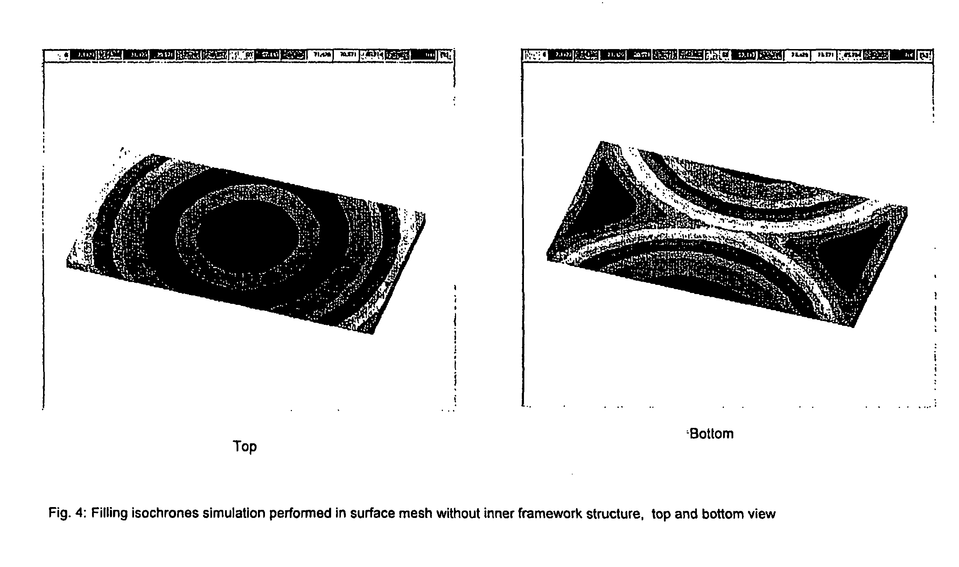

The filling pattern in **fig. 4** where the plate is injected in the center of the top, is obviously wrong. The isochrones should look more or less the same in the top and bottom view. The reason for this is, that the flow simulation is only performed on the surface of the part with a given thickness and without an inner framework structure or approaches to synchronize the flow.

One method to avoid this problem is described in US patent 6,096,088 with matching each element of the first surface with an element of the second surface between which a reasonable thickness may be defined, wherein matched elements of the first surface constitute a first set of matched elements and matched elements of the second surface constitute a second set of matched elements, specifying an injection point, and performing a flow analysis using each set of the matched elements. In this way, the injection point is linked to all locations of the first and second surfaces from which flow may emanate such that resulting flow fronts along the first and second surfaces are synchronized."

It is the main object of the instant invention to describe a new method to use surface models for simulation of fluid flow within thin walled three dimensional geometries avoiding the generation of a midplane or using a standard volumetric mesh.

According to the invention a computer-implemented method of simulating a fluid flow is defined in claim 1 and a computer-implemented method of performing a structural analysis is defined in claim 13.

Further important objects according the invention are achieved by the features being subject of the subclaims.

The figures listed below are to be of assistance when reading the description.
- Fig.1: Comparison of volumetric model and midplane model;
- Fig.2: Finite element mesh of bulb socket;
- Fig.3: .stl file of a box type part;
- Fig.4: Filling isochrones simulation performed in surface mesh without inner framework structure, top and bottom view;
- Fig.5: Surface model method according to the invention with inner structure cut through part;
- Fig.6: Filling isochrones simulation performed in surface mesh with inner framework structure according to the invention, top and bottom view;
- Fig.7: Shrinkage and warpage simulation (y-direction) of an unisotropic (fiber filled) plastic part according to the invention, comparison midplane and surface model;
- Fig.8: Treatment on forces with and without surface mode method internal structure according to the invention;
- Fig.9: Filling isochrones comparison between subject of Invention and US patent 6,096,088;
- Fig.10: Injection comprssion molding;
- Fig.11: Injection compression molding and ,
- Fig.12: Sandwich injection molding comparison of midplane and the surface model method according to the invention.

According to the invention the course of simulation is as follows:
1. Read the geometry description file (.stl, .vrml, IGES, STEP, VDA-FS, FEM-Volume-Model, FEM-Model of surface)
2. Read material parameter (viscosity, thermal parameter)
3. Read process parameter (mass temperature, volume rate, packing pressure, packing duration, wall temperatures, injection point)
4. Repair geometry description if necessary
5. Generate surface mesh
6. Measure thickness
7. Generate internal structure
8. Define gate location and/or runner
9. Define boundary conditions to simulation
10. Run calculation
11. Store results
with some of the before mentioned steps not being absolutely necessary in some cases.

Only the points 4, 6, 7 and 11 differ from a calculation in the midplane model.

Point 4 differs because using a midplane model normally the geometry description is accepted as it is. For the surface model method according to the invention the geometry has to be one closed surface.

Point 6 differs because in a midplane model the thickness is already defined.

Point 7 differs because a midplane model does not need the internal structure.

Point 11 differs because some values on the internal structure have to be neglected.

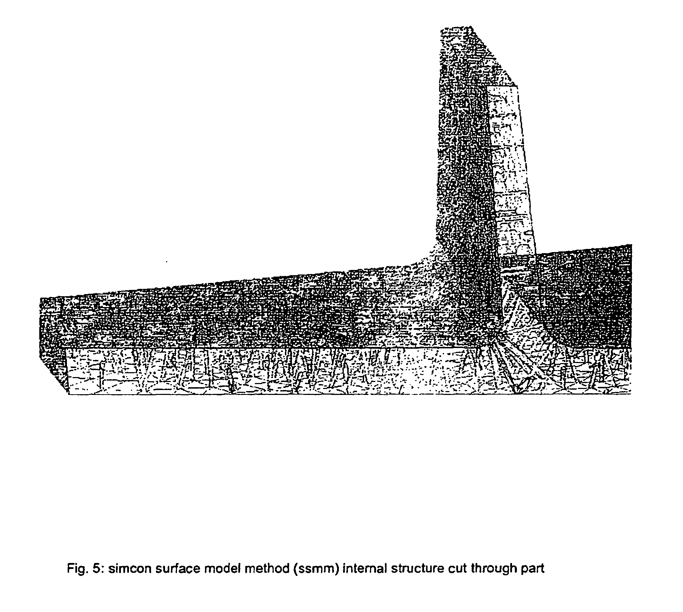

In detail the following steps have to be performed to run a simulation using the described invention:
1. Input for the simulation is an outer skin or volumetric geometry description of the part. In case of inserts the interface of the injected material to the insert is understood to be a skin in the same sense. This may be a CAD file like IGES, VDA-FS, STEP or a Finite Element file containing triangles, quadrilaterals, hexahedra, pentahedra or an other format describing the volume or the outer skin geometry of the part as from which surface describing entities like thin shell triangles (.stl, .vrml) may be derived. A common format to describe part geometries, originally made for Rapid Prototyping, is a so called .stl file.
   In case a surface description like IGES, VDA-FS or a volumetric description like STEP, which contains a surface description or from which a surface description may be derived is used the surface has to be subdivided into Finite Elements. This is a common task in finite element calculation.
2. The material data can be read from a material data base or directly given by the user. The data needed are the same as for the other simulation methods (midplane, 3D-Volume, BEM) and so this is standard. The simulation program needs data to describe the viscosity, the density and the thermal behavior.
3. The process parameter give the necessary boundary conditions for the simulation. These are at least: the temperature of the injected material, the volume rate of injection, the wall temperatures, which means the temperature at the surface of the cavity, the gate locations, which means the position where the melt is injected into the cavity. If a packing simulation is desired the program needs additionally the packing pressure and the packing time.
4. The description of the part for the surface model is one closed surface. Sometimes the given CAD-data do not comply with this demand, so they do not describe a three dimensional body. If, for example, the surface has gaps, they have to be patched. If parts of the surface exist twice one of them has to be deleted. The algorithms have sufficient robustness to sustain a certain remaining amount of defects after repair without significant error in the results.
   In addition to the mesh rules for midplane models there are two further commandments that apply to surface models, derived from the fact that the surface information describes the entire interfacing surface of the fluid to its environment including also possible inserts:
   1. Gaps in the surface have to be seen as errors in the mesh.
   2. More than two elements sharing one edge (branches) cannot be correct for topological reasons.
5. For the finite element simulation a mesh of finite elements has to be generated, which approximate the surface. This is standard in finite element analysis. The elements can be in principal triangles or quadrilaterals. The surface method uses triangles. The Finite Elements mesh generated on CAD surfaces or given in one of the formats of 1. may not fit the needs of a Finite Element mesh suitable for fluid flow simulation. Therefore for correct and fast simulation it may be necessary to modify, "repair", refine or coarsen the Finite Element mesh interactively or automatically.
   E.g. an stl input file comprises triangular facets. These were originally created in order to describe the surface of the part within a given tolerance to the true designed surface with the least number of facets. This leads to highly distorted triangles compared to an equilateral triangle. Also large curvatures as found in radii produce a large number of facets.
   Triangles in simulation are a specific type of "elements". The entity of elements describing the part is called "mesh", the corners of the elements are defined by "nodes". The midplane simulation asks for a satisfactory high number of elements to resolve the changes in physical properties. Too many elements may slow down the simulation and thus reduce efficiency. Numeric asks for elements with low distortion. To allow the flow to pass from one element to the adjacent element these elements must share an edge, this is called "connectivity".
   For the target to perform a surface simulation the requirements regarding element number, shape and connectivity are the same as in a midplane model.
   Therefore the next important step is to prepare the given facet structure to fit these rules. During the preparation run the facet structure is remeshed to fit a predefined element size (= edge length). Distortions are resolved as far as possible. By increasing the tolerance to the original surface accumulations of elements at radii are reduced in number. Gaps are closed as many as possible. Isolated elements or clusters of such elements are removed on request.
   So far no steps specific for the simulation were taken. Similar could be done using third-party software, e.g. DeskArtes
6. To perform a process simulation the solver needs a numerical information of the local part thickness. This applies to the midplane as well as to the surface model. In the surface model it is possible to determine the local thickness information by measuring the length of a vector starting in the center of gravity of each triangle normal to the element plane in the direction to the inside of the part until the vector leaves the part. This is the first defined thickness. If no reasonable vector length can be found, because e.g. the stl file is corrupt, a reasonable thickness will be automatically defined. In addition the user may also define a range in which the thickness should be. In addition these thicknesses are limited by the following method:
   For each other element its thickness and its distance to the element of which the thickness may be limited are summed. The limited thickness is the minimum of said sums and the first defined thickness. Instead of all other elements only a part of the elements can be taken to limit the thickness.
7. Except for trivial parts running a simulation on a mesh created so far would give probably nonsense results. As the direction of flow cannot be known beforehand the surface mesh is filled with a framework of rod elements extending from node to node through the part's inside within a reasonable short distance at a reasonable low deviation from the normal direction. These rod elements have a physical diameter to represent a flow restriction.
   The simcon surface model method builds a semi-volumetric mesh, by generating two-noded elements within the part volume like in a three dimensional framework **(fig. 5)**. In the three dimensional Finite Element framework all nodes are generally connected. But for practical reasons (calculation time and memory) the two-noded elements are only established between nodes, which are close to each other in some sense, the angels of the surface normals are in a certain range and the connection line lies in the interior of the part. In the surface model method close to each other means, that the distance between the nodes is smaller than a multiple of the average thickness of the surrounding elements of the nodes.
   The length of the internal two-noded elements is proportional to the determined local part thickness plus a given tolerance. The internal two-noded elements are given a parametrical diameter, which is related to the determined local thickness. This allows the melt to flow not only parallel to the surface, but out of it and in at another point.
   Because one of the assumptions of the generalized Hele-Shaw-Approximation is that the flow is a local parallel plate flow, a flow perpendicular to the surface means a contradiction to this assumption. Therefore this part of the method described in this invention should be regarded as a generalization of the generalized Hele-Shaw-Approximation.
   All work for this model can be done in the phase of preprocessing the geometry. The solver of the calculation kernel still remains the same.
8. In the next step the location of the injection point has to be specified. This can be done by either picking an arbitrary place on the part's surface or by typing in exact coordinates of this point. If the defined point does not lie on the surface the defined point is projected to the part's surface in direction of the present viewing direction. The injection point is integrated into the mesh by splitting the element it lies in if necessary. Runner segments, if defined, are meshed into rod (2-node) elements of designed diameter. Non-circular cross-sections are converted to the equivalent hydraulic diameter as known from general flow analysis. These may be defined as cold or hot runner type.
9. Depending on the material choice the processing parameters of temperatures of melt and wall need to be set or can be accepted from recommended data. Furthermore the injection profile or a constant speed has to be defined based on the volume of the part derived from the input data set. The only difference to the midplane simulation is the way to determine the volume to be filled. For a midplane this can only be based on the element areas and their respective attributed thicknesses. This can be based on the input geometry data. That means the volume enclosed by the surface is taken.
10. The simulation can be performed with and in the same way as with the standard midplane model solver: The simulation starts with detecting the neighboring nodes of each node and determining the volume of each control volume. For this the volume of the connector elements are set to zero. Then the initial values are set. That means the control volumes at the gate location get a filling factor of 1 all others of 0.
   The temperature and the pressure at the gate are set.
   After the initialisation for every time step the following is calculated:
   - Pressure
   - Flow rates between control volumes
   - Filling fractions of the control volumes
   - Temperatures

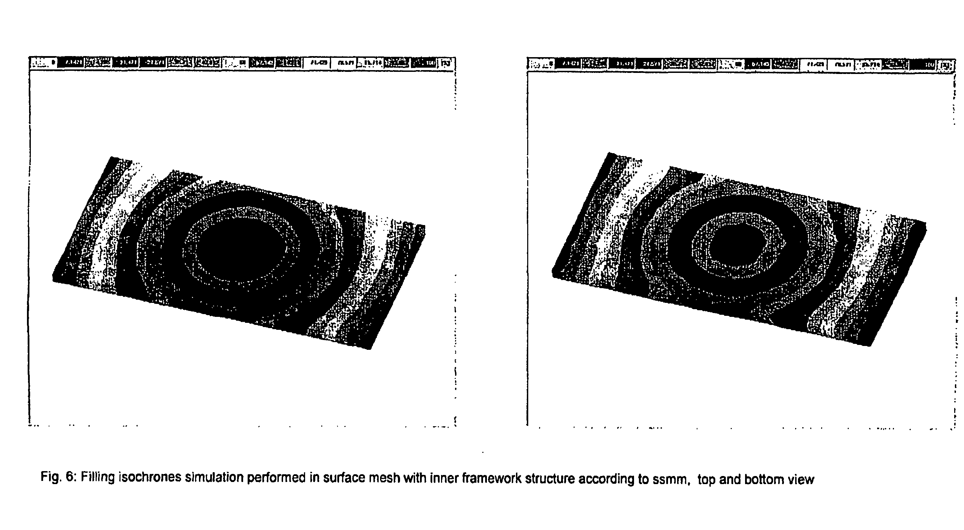

   Midplane and Surface models may be mixed . The local flow rate for the surface model is adapted to the real flow behaviour. That means they are scaled by the fraction of the volume that are generated by the sum of the control volumes and the real part volume calculated form the surface information.
11. During and at the end of the calculation results are stored. These are e.g. the pressure distribution, the temperature distribution, the filling pattern, the flow front temperature, the flow front velocity and the volume shrinkage **(fig. 6)**.
12.The presentation of the results is performed on the original or the modified input file.

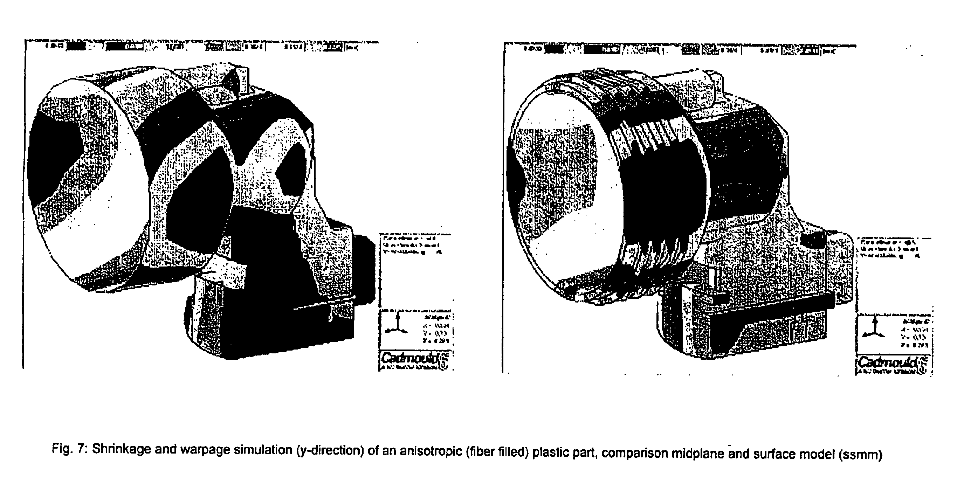

The internal structure generated for the surface model method can not only be used for flow simulation, but also for structural analysis, such may e.g. occur in the prediction of shrinkage and warpage of injection molded parts with isotropic and anisotropic material behaviour **(fig. 7).**

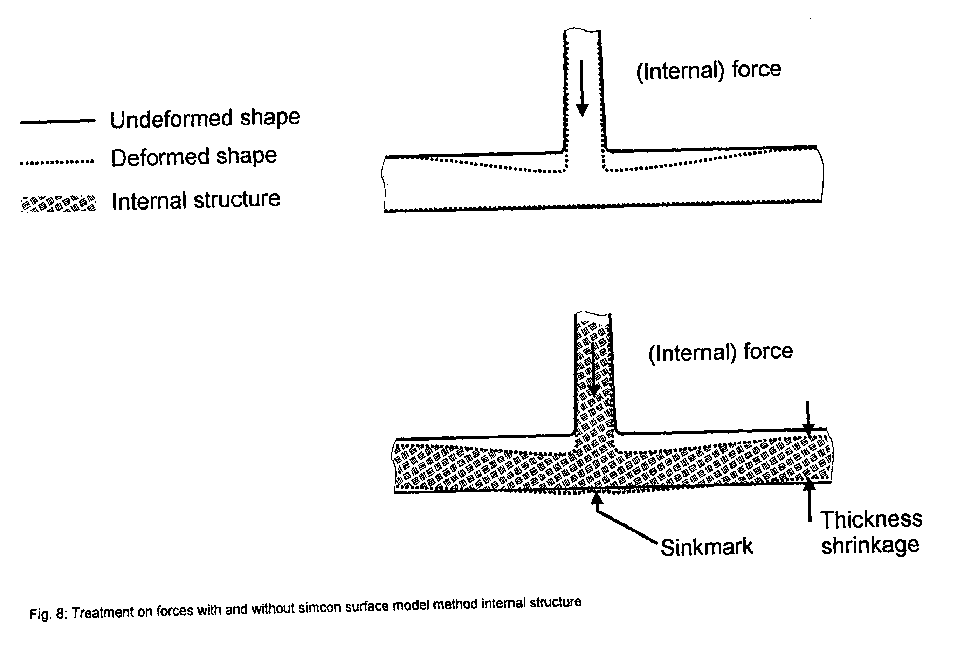

If a mechanical analysis is done in a surface model and for this the surface is modeled only as an outer skin, some inner forces are not treated correctly. An example for this is a T-branch. If for example the rib presses on the crossbeam, the forces are only transmitted to the upper shell of it. Therefore this will be bent too strong, the lower shell of the crossbeam on the other hand will not be bent. To prevent this circumstance, the inner structure of the surface model method is used to transmit these forces. The two-noded elements are able to transmit forces in the direction of the line between their nodes. The mechanical values for this are calculated from the average values of the shell elements surrounding the nodes of a two-noded element **(fig. 8)**

For the determination of the stress, which results from the shrinkage and determines the load vector, the average relative change of length is calculated for the shell elements surrounding the nodes of the cylinder. From this value and the mechanical data the stress is calculated in the normal manner for rods. That means, the distortion is multiplied with the elasticity matrix.

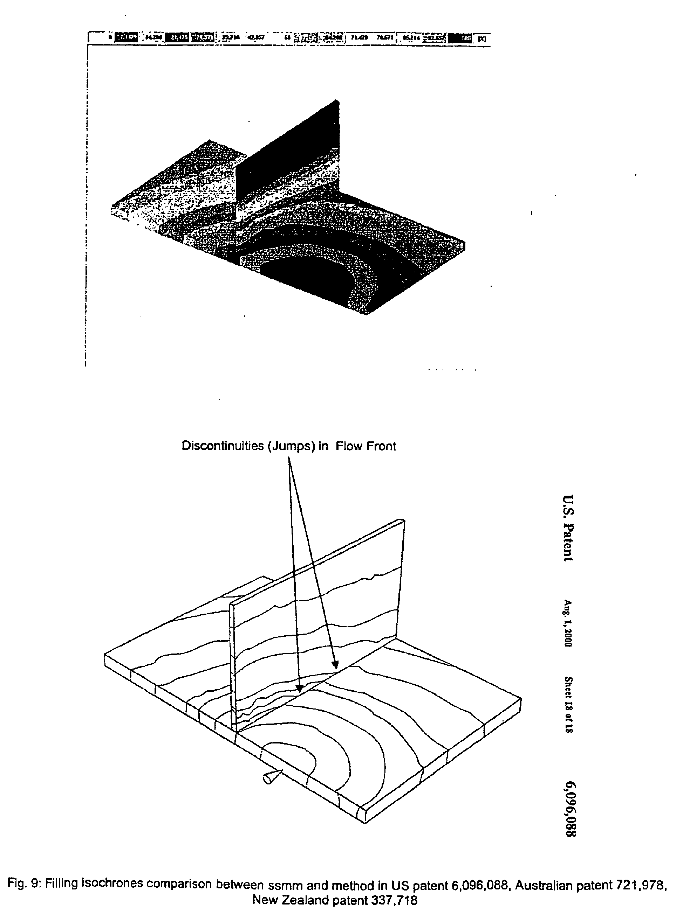

The invented method takes conservation of mass into account therefore e.g. discontinuities (jumps) in the flow front as they occur with the method described in US patent 6,096,088 will not appear **(fig. 9).**

With the invented method it is as easy to adapt a runner system as in a midplane model, because the inner structure, in which all nodes are linked, allows the melt to distribute into the cavity from any location on the part surface without additional mathematical effort like synchronizing.

The invented method allows to simulate cascadic injection molding by switching on and off the melt flow multiple times during filling and packing at one or more locations in the runner system.

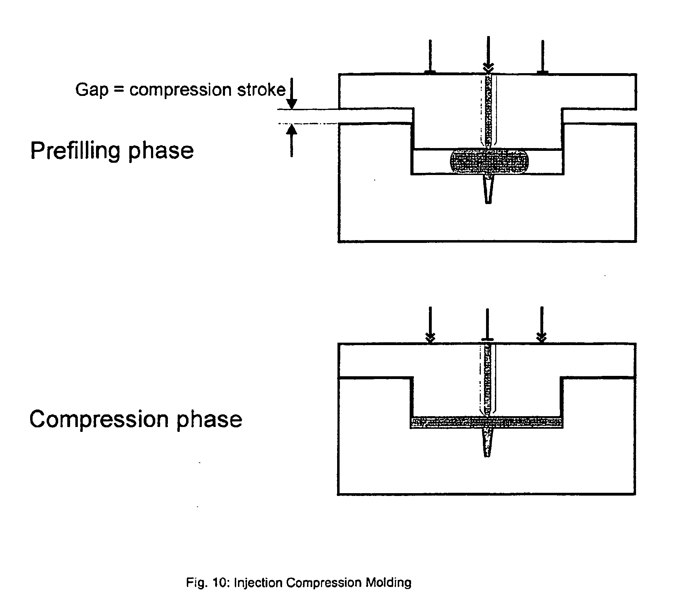

The invented method allows to simulate injection compression molding where during or after injection of the plastic one half or part of the mold is moved to perform a pressing phase to fill the cavity and/or apply packing pressure **(fig. 10)**.

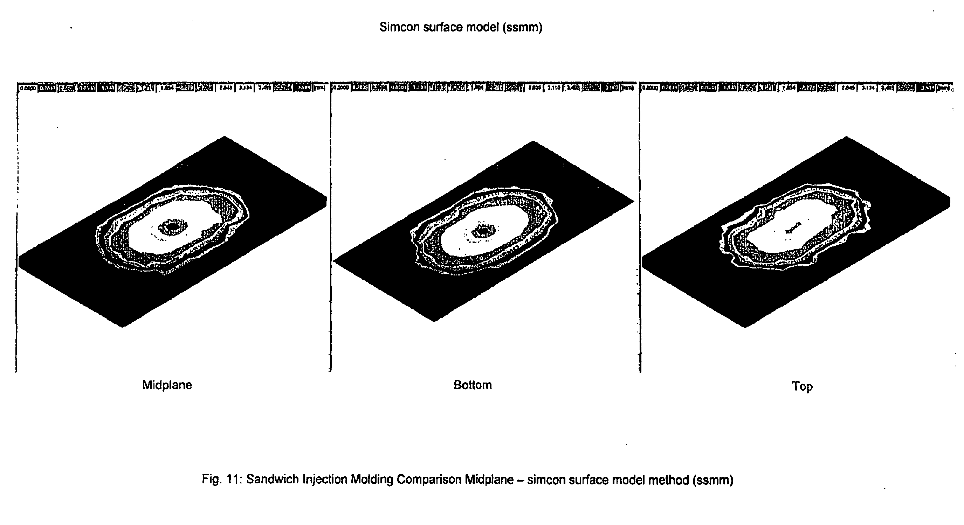

The invented method allows to simulate special injection molding processes like sandwich injection molding, where two 2 different fluids are injected into the same cavity in consecutive shots **(fig. 11)**.

The invented method allows as easily to adapt additional software from other sources as in midplane simulation, because the internal structure allows to treat a Finite Element model in the same way as a midplane model. One example for this is the adaptation of injection location optimization software, which was originally developed for midplane simulation.

The invented method allows to use the inner structure to determine and present the thickness shrinkage, an often occurring surface quality problem of plastic parts **(fig. 8).**

## Claims

1. Computer-simplemented method of simulating a fluid flow within thin-walled three-dimensional geometries in which the input for the simulation is an outer skin or a volumetric geometry description, wherein
a Finite Element Mesh is generated on the surface of the outer skin or the volumetric geometry description,
for getting a numerical information of the local part thickness a first defined thickness is achieved by measuring the length or the vector starting from the centre of gravity of each polygon normal to the element plane in the direction to the inside of the part until the vector leaves this part,
inside the surface mesh a framework of internal rod elements is generated extending from node to node of the polygons through the part's inside within reasonable low distance from the normal direction
after defining the injection points on the polygons, the material parameter for a fluid, and the process condition, a fluid flow simulation is performed using the generated mesh and the internal rod elements, and
storing at least the pressure and the filling patterns for said fluid

2. Method according to claim 1, wherein in case of inserts the surface of the injected material to the insert is understood to be a skin in the same sense.

3. Method according to claim 1, wherein the input is a CAD file like IGES, VDA-FS, STEP or Finite Element Mesh.

4. Method according to claim 2, wherein the input files contain triangles, tetrahedral, quadrilateral, hexahedral, pentahedral or an outer skin geometry of the part as from which entities like thin shell triangles maybe derived describing the part's surface.

5. Method according to one of the proceeding claims, wherein the input contains material - and/or process parameters.

6. Method according to one of the proceeding claims, wherein gaps and branches are automatically recognized.

7. Method according to one of proceeding claims, wherein the Finite Element mesh is interactively or automatically modified, repaired, refined or coarsened.

8. Method according to one of the proceeding claims, wherein for defining the local part thickness in case no reasonable vector length can be found a reasonable thickness is automatically defined.

9. Method according to one of the proceeding claims, wherein for defining the local part thickness a range is defined by the user.

10. Method according to one of the proceeding claims, wherein for defining the local part thickness the first defined thickness is limited by the minimum of first defined thickness and the individual sums of the thickness and the distance to any other element.

11. Method according to claim 10, wherein only a part of all other elements is taken to limit the thickness.

12. Method according to one of the proceeding claims, wherein said internal rod elements are given a parametrical diameter which is related to the determined local thickness.

13. Method according to one of the proceeding claims, wherein the injection point is integrated into the mesh by splitting the element it lies in.

14. Method according to one of the proceeding claims, wherein runner geometries are meshed into rod elements of the designed diameter.

15. Method according to claim 14, wherein non-circular cross-sections are converted to the equivalent hydraulic diameter.

16. Method according to claim 14 or 15, wherein the rod elements are defined as cold or hot runners.

17. Method according to one of the proceeding claims, wherein the local flow rate for the surface model is adapted to real behavior, i.e. the flow rates are scaled by the fractions of the volume that are generated by the sum of the control volumes and the part volume encompasted by the parts surface

18. Method according to one of the proceeding claims, wherein conservation of mass is taken into account.

19. Method according to one of the proceeding claims, wherein the inner structure of said internal rod elements allows the fluid to distribute into the from any location on the part surface without mathematical effort like synchronizing.

20. Method according to one of the proceeding claims, wherein cascadic injection molding is allowed.

21. Method according to one of the proceeding claims, wherein the simulation of injection compression is allowed by modifying the local part thickness.

22. Method according to one of the proceeding claims, wherein it allows to simulate special injection molding processes like sandwich injection molding where two different fluids are injected into the same cavity in consecutive shots.

23. Computer-implemented method of performing a structural analysis within thin-walled three-dimensional geometries in which the input for the analysis is an outer skin or a volumetric geometry description, wherein
a Finite Element Mesh is generated on the surface and
for getting a numerical information of the local part thickness a first defined thickness is achieved by measuring the length of a vector starting from the centre of gravity of each polygon normal to the element plane in the direction to the inside of the part until the vector leaves this part,
inside the surface mesh a framework of internal rod elements is generated, extending from node to node of the polygons through the part's inside within reasonable low distance from the normal direction,
after defining the material properties, the boundary conditions and the load, a structural analysis is performed by using the generated structure, and storing as results from this analysis at least the displacements of the nodes and the remaining stress.

24. Method according to claim 23, wherein the rod elements of the internal structure are provided with mechanical properties and thus transfer loads.

25. Method according to claim 23, using the inner structure to determine and present the thickness shrinkage.

## Patentansprüche

1. Computer-implementiertes Verfahren zur Simulation eines Strömungsflusses in dünnwandigen dreidimensionalen Geometrien, in welchen die Eingabe für die Simulation eine äußere Haut oder eine volumetrische Geometriebeschreibung ist, wobei
ein Finite-Elemente-Netz auf der Oberfläche der äußeren Haut oder der volumetrischen Geometriebeschreibung generiert wird,
zur Gewinnung einer numerischen Information der lokalen Formteildicke eine erste Dicke durch Messung der Länge des Vektors, ermittelt wird, der von dem Schwerpunkt jedes Polygons normal zur Elementebene in das Innere des Teils verläuft bis er dieses Teil verlässt,
innerhalb des Oberflächennetzes ein Fachwerk von internen Stabelementen generiert wird, die von Knoten zu Knoten der Polygone durch das Innere des Teils innerhalb eines sinnvollen kleinen Abstandes von der Normalenrichtung verlaufen,
nach der Festlegung der Injektionspunkte auf den Polygonen, der Materialparameter für ein Fluid und der Prozessbedingung eine Strömungssimulation durchgeführt wird, bei der das generierte Netz und die internen Stabelemente verwendet werden,
und zumindest der Druck und die Fülllinien für das besagte Fluid abgespeichert werden.

2. Verfahren nach Anspruch 1, wobei im Falle von Einlegeteilen die Oberfläche des eingespritzten Materials am Einlegeteil als Oberfläche in demselben Sinn verstanden wird.

3. Verfahren nach Anspruch 1, wobei die Eingabe ein CAD File wie IGES, VDA-FS, STEP oder ein Finite Elemente Netz ist.

4. Verfahren nach Anspruch 2, wobei die Eingabedateien Dreiecke, Tetraeder, Vierecke, Hexaeder, Pentaeder oder eine Geometrie der äußeren Haut des Teils enthalten, von der Oberflächen beschreibende Einheiten wie dünnschalige Dreiecke abgeleitet werden können.

5. Verfahren nach einem der vorhergehenden Ansprüche, wobei die Eingabe Material- und/oder Prozessparameter enthält.

6. Verfahren nach einem der vorhergehenden Ansprüche, wobei Lücken und Verzweigungen automatisch erkannt werden.

7. Verfahren nach einem der vorhergehenden Ansprüche, wobei das Finite-Elemente-Netz interaktiv oder automatisch modifiziert, repariert, verfeinert oder vergröbert wird.

8. Verfahren nach einem der vorhergehenden Ansprüche, wobei zur Definition der lokalen Dicke, falls keine sinnvolle Vektorlänge gefunden werden kann, eine sinnvolle Dicke automatisch definiert wird.

9. Verfahren nach einem der vorhergehenden Ansprüche, wobei zur Bestimmung der lokalen Dicke von dem Benutzer ein Bereich angegeben wird.

10. Verfahren nach einem der vorhergehenden Ansprüche, wobei zur Bestimmung der lokalen Teildicke die zuerst definierte Dicke durch das Minimum der zuerst definierten Dicke und die individuellen Summen der Dicke und der Distanz zu jedem anderen Element beschränkt wird.

11. Verfahren nach Anspruch 10, wobei nur ein Teil von allen anderen Elementen zur Begrenzung der Dicke benutzt wird.

12. Verfahren nach einem der vorhergehenden Ansprüche, wobei den besagten internen Stabelementen ein parametrischer Durchmesser gegeben wird, welcher mit der bestimmten lokalen Dicke in Beziehung steht.

13. Verfahren nach einem der vorhergehenden Ansprüche, wobei der Injektionspunkt durch Aufteilen des Elements, in dem er liegt, in das Netz integriert wird.

14. Verfahren nach einem der vorhergehenden Ansprüche, wobei die Verteilergeometrien mit Stabelementen des zugewiesenen Durchmessers vernetzt werden.

15. Verfahren nach Anspruch 14, wobei nicht kreisförmige Querschnitte in einen äquivalenten hydraulischen Durchmesser überführt werden.

16. Verfahren nach Anspruch 14 oder 15, wobei die Stabelemente als Kalt- oder Heißverteiler definiert werden.

17. Verfahren nach einem der vorhergehenden Ansprüche, wobei der lokale Volumenstrom für das Oberflächenmodell an das reale Verhalten adaptiert wird, das heißt, die Volumenströme werden durch das Verhältnis der Volumen gebildet durch die Summe der Kontrollvolumina und des Teilvolumens, welches durch die Oberfläche des Teils umfasst wird, skaliert.

18. Verfahren nach einem der Ansprüche 14 oder 15, wobei die Massenerhaltung berücksichtigt wird.

19. Verfahren nach einem der vorhergehenden Ansprüche, wobei die innere Struktur aus besagten internen Stabelementen dem Fluid erlaubt, sich von jeder Stelle der Oberfläche aus ohne mathematischen Aufwand, wie z.B. Synchronisation, auszubreiten.

20. Verfahren nach einem der vorhergehenden Ansprüche, wobei Kaskaden-Spritzgießen zugelassen wird.

21. Verfahren nach einem der vorhergehendem Ansprüche, wobei die Simulation von Spritzprägen durch Modifikation der lokalen Dicke erlaubt ist.

22. Verfahren nach einem der vorhergehenden Ansprüche, wobei es möglich
ist, besondere Spritzgießtechniken wie das Sandwichspritzgießen zu simulieren, wobei zwei verschiedene Fluide hintereinander in die gleiche Kavität eingespritzt werden.

23. Computer-implementiertes Verfahren zur Durchführung einer Strukturanalyse innerhalb dünnwandiger dreidimensionaler Geometrien, wobei die Eingabe für die Analyse eine äußere Haut oder eine volumetrische Geometriebeschreibung ist, wobei
ein Finite-Elemente-Netz auf der Oberfläche generiert wird und
um eine numerische Information der lokalen Formteildicke zu erhalten, eine erste Dicke durch Messung der Länge des Vektors, der vom Schwerpunkt jedes Polygons normal zur Elementenebene in das Innere des Teils verläuft bis er das Teil verlässt, erzielt wird,
innerhalb des Oberflächennetzes ein Fachwerk aus internen Stabelementen generiert wird, die von Knoten zu Knoten der Polygone durch das Innere des Teils innerhalb eines sinnvollen Abstandes von der Normalenrichtung verlaufen,
nach der Definition der Materialeigenschaften, der Randbedingungen und der Last, unter dem Gebrauch der generierten Struktur eine Strukturanalyse ausgeführt wird und als Ergebnis dieser Analyse zumindest die Knotenverschiebungen und die Restspannung abgespeichert werden.

24. Verfahren nach Anspruch 23, wobei die Stabelemente der internen Struktur mit mechanischen Eigenschaften ausgestattet sind und somit Lasten übertragen können.

25. Verfahren nach Anspruch 23, wobei die innere Struktur benutzt wird, um die Dickenschwindung zu bestimmen und zu präsentieren.

## Revendications

1. Procédé mis en oeuvre par ordinateur de simulation d'un écoulement fluide au sein de géométries tridimensionnelles à parois minces dans lequel l'entrée pour la simulation est une peau externe ou une description de géométrie volumétrique, dans lequel
une maille à éléments finis est engendrée sur la surface de la peau externe ou de la description de géométrie volumétrique,
pour obtenir une information numérique de l'épaisseur de pièce locale, une première épaisseur définie est obtenue en mesurant la longueur du vecteur commençant du centre de gravité de chaque polygone normal au plan d'élément dans la direction vers l'intérieur de la pièce jusqu'à ce que le vecteur quitte cette pièce,
à l'intérieur de la maille de surface, un cadre d'éléments de tiges internes est engendré s'étendant de noeud à noeud des polygones à travers l'intérieur de la pièce au sein d'une distance basse raisonnable de la direction normale,
après définition des points d'injection sur les polygones, du paramètre de matériau pour un fluide et de la condition de processus, une simulation d'écoulement fluide est effectuée en utilisant la maille engendrée et les éléments de tiges internes, et
en stockant au moins la pression et des motifs de remplissage pour ledit fluide.

2. Procédé selon la revendication 1, dans lequel, dans les cas d'inserts, la surface du matériau injecté à l'insert est entendue comme étant une peau dans le même sens.

3. Procédé selon la revendication 1, dans lequel l'entrée est un fichier de CAO, comme IGES, VDA-FS, STEP, ou une maille à éléments finis.

4. Procédé selon la revendication 2, dans lequel les fichiers d'entrée contiennent des triangles, des entités tétraédriques, quadrilatérales, hexaédriques pentaédriques ou une géométrie de peau externe de la pièce, à partir desquels des entités décrivant la surface de la pièce, comme des triangles à coque mince, peuvent être dérivées.

5. Procédé selon l'une quelconque des revendications précédentes, dans lequel l'entrée contient les paramètres de matériaux et/ou de processus.

6. Procédé selon l'une quelconque des revendications précédentes dans lequel les interstices et les branches/ramifications sont reconnus automatiquement.

7. Procédé selon l'une quelconque des revendications précédentes, dans lequel la maille à éléments finis est modifiée, réparée, affinée ou rendue plus grossière d'une manière interactive ou automatique.

8. Procédé selon l'une quelconque des revendications précédentes, dans lequel, lors de la définition de l'épaisseur de pièce locale, dans le cas où aucune longueur de vecteur raisonnable ne peut être trouvée, une épaisseur raisonnable est automatiquement définie.

9. Procédé selon l'une quelconque des revendications précédentes, dans lequel un domaine est défini par l'utilisateur en vue de la définition de l'épaisseur de pièce locale.

10. Procédé selon l'une quelconque des revendications précédentes, dans lequel, en vue de la définition de l'épaisseur de pièce locale, la première épaisseur définie est limitée par le minimum de la première épaisseur définie et les sommes individuelles de l'épaisseur et de la distance à tout autre élément.

11. Procédé selon la revendication 10, dans lequel une partie seulement de tous les autres éléments est prise pour limiter l'épaisseur.

12. Procédé selon l'une quelconque des revendications précédentes, dans lequel on attribue auxdits éléments de tiges internes un diamètre paramétrique qui est associé à l'épaisseur locale déterminée.

13. Procédé selon l'une quelconque des revendications précédentes, dans lequel le point d'injection est intégré dans la maille en fracturant l'élément dans lequel il est situé.

14. Procédé selon l'une quelconque des revendications précédentes, dans lequel des géométries de canaux sont mises sous forme de maille dans les éléments de tiges du diamètre désigné.

15. Procédé selon la revendication 14, dans lequel, des sections transversales non circulaires sont converties au diamètre hydraulique équivalent.

16. Procédé selon la revendication 14 ou 15, dans lequel les éléments de tiges sont définis en tant que canaux chauds ou froids.

17. Procédé selon l'une quelconque des revendications précédentes, dans lequel le débit local pour le modèle de surface est adapté au comportement réel, c'est-à-dire que les débits sont réduits en échelle par les fractions du volume qui sont engendrées par la somme des volumes de contrôle et le volume de pièce englobé par la surface des pièces.

18. Procédé selon l'une quelconque des revendications précédentes, dans lequel la conservation de la masse est prise en compte.

19. Procédé selon l'une quelconque des revendications précédentes, dans lequel la structure interne desdits éléments de tiges internes permet au fluide de se répartir d'un endroit quelconque sur la surface de pièce sans effort mathématique comme la synchronisation.

20. Procédé selon l'une quelconque des revendications précédentes, dans lequel un moulage par injection en cascade est permis.

21. Procédé selon l'une quelconque des revendications précédentes, dans lequel la simulation de la compression par injection est permise par modification de l'épaisseur de pièce locale.

22. Procédé selon l'une quelconque des revendications précédentes, qui permet de simuler des processus spéciaux de moulage par injection, comme le moulage par injection en sandwich, où deux fluides différents sont injectés dans la même cavité au cours de charges d'injection consécutives.

23. Procédé mis en oeuvre par ordinateur d'exécution d'une analyse de structure au sein de géométries tridimensionnelles à parois minces, dans lequel l'entrée pour l'analyse est une peau externe ou une description de géométrie volumétrique, dans lequel
une maille à éléments finis est engendrée sur une surface et pour obtenir une information numérique de l'épaisseur de pièce locale, une première épaisseur définie est obtenue en mesurant la longueur d'un vecteur commençant du centre de gravité de chaque polygone normal au plan d'élément dans la direction vers l'intérieur de la pièce jusqu'à ce que le vecteur quitte cette pièce,
à l'intérieur de la maille de surface, un cadre d'éléments de tiges internes est engendré, s'étendant de noeud à noeud des polygones à travers l'intérieur de la pièce au sein d'une distance basse raisonnable de la direction normale,
après la définition des propriétés de matériau, des conditions limites et de la charge, une analyse de structure est effectuée en utilisant la structure engendrée et en stockant, en tant que résultats de l'analyse, au moins les déplacements des noeuds et la contrainte résiduelle.

24. Procédé selon la revendication 23, dans lequel les éléments de tiges de la structure interne sont pourvus de propriétés mécaniques et transmettent ainsi des charges.

25. Procédé selon la revendication 23, utilisant la structure interne pour déterminer et présenter le retrait d'épaisseur.
